# FASCICULE DE BREVET EUROPEEN

(11) **EP 2 553 659 B1**
(45) Date de publication et mention de la délivrance du brevet: **11.05.2016**
(21) Numéro de dépôt: 11713012.0
(22) Date de dépôt: 15.03.2011
(51) Int. Cl.: G06T 7/00

(54) **DISPOSITIF DE TRAITEMENT D'OBJETS AVEC SURVEILLANCE EN TEMPS RÉEL DE LA QUALITÉ DES IMAGES DES OBJETS, MACHINE DE TRI ET PROCÉDÉ**
VORRICHTUNG ZUR VERARBEITUNG VON OBJEKTEN MIT ECHTZEITÜBERWACHUNG DER OBJEKTBILDQUALITÄT, SORTIERER UND VERFAHREN
DEVICE FOR PROCESSING OBJECTS, HAVING REAL-TIME MONITORING OF OBJECT IMAGE QUALITY; SORTING MACHINE; AND METHOD

(30) Priorité: 30.03.2010 FR 1052355
(43) Date de publication de la demande: 06.02.2013
(73) Titulaire: Solystic, 92220 Bagneux (FR)
(72) Inventeur: DESCHAMPS, Eric, F-95320 Saint Leu La Foret (FR); CAILLON, Christophe, F-91220 Bretigny Sur Orge (FR); DAUTAIN, Marc, F-91220 Bretigny Sur Orge (FR)
(74) Mandataire: Prugneau, Philippe
(86) Numéro de dépôt international: PCT/FR2011/050520
(87) Numéro de publication internationale: WO 2011/124794

(56) Documents cités:
- EP-A2- 0 531 229
- ImaTest LLC: "Using Blemish Detect Measure visible sensor defects", , janvier 2010 (2010-01), XP002610864, Extrait de l'Internet: URL:www.imatest.com/docs/blemish.html [extrait le 2010-11-19]

## Description

### Domaine technique

L'invention concerne un dispositif de traitement d'objets comprenant un convoyeur pour déplacer en série sur chant des objets, une caméra orientée transversalement au convoyeur pour former une image numérique de chaque objet, une unité de traitement de données pour réaliser un traitement sur les pixels de l'image de l'objet, et en outre un moyen pour contrôler/surveiller la qualité des images formées par la caméra. L'invention concerne également une machine de tri postal comprenant un tel dispositif et un procédé pour contrôler et surveiller la qualité des images numériques pour dispositif de traitement d'objets.

### Technique antérieure

Un tel dispositif est plus particulièrement destiné à une machine de tri postal dans laquelle la performance de la machine de tri est directement liée au taux de reconnaissance automatique des adresses de distribution sur les envois postaux. Par envoi postal, on entend tout envoi plat allant de la simple lettre au magazine avec ou sans enveloppe en papier ou en plastique. Une dégradation de la qualité des images formées par la caméra peut affecter, dans une large mesure, le taux de reconnaissance des adresses de distribution sur les envois et donc la performance de la machine de tri. Par caméra, on entend un système d'acquisition d'images numériques typiquement constitué d'un capteur CCD associé dans un boîtier à des lentilles et couplé à une unité de traitement de données, le plan focal des lentilles du capteur CCD étant orienté pour visualiser une ligne transversale au pied de la lettre ou de l'enveloppe et ces lentilles étant par ailleurs généralement protégées par une lame transparente en verre ou analogue superposée au boîtier.

Actuellement, il est prévu comme moyen pour contrôler et surveiller la qualité des images formées par la caméra, un système qui mesure le taux instantané et le taux moyen de reconnaissance automatique des adresses et qui déclenche une alarme ou même stoppe le fonctionnement de la machine de tri si ces paramètres mesurés viennent à baisser fortement.

On connait, notamment par la publication Ima Test LLC: "Using Blemish Detect Measure visible sensor defects", janvier 2010, un dispositif de détection de défaut de l'objectif par analyse des défauts de l'image ayant traversé l'objectif. De tels dispositifs ne permettent toutefois pas de traiter des objets tels que des envois postaux.

Il est également prévu sur les machines de tri actuelles, un système d'affichage sur écran des images successives des envois qui passent devant la caméra pour un contrôle visuel de leur qualité par un opérateur. Les images sont en fait affichées sur l'écran sous la forme de vignettes en basse résolution de sorte que le contrôle n'est pas très sûr et il peut arriver que la machine soit exploitée pendant une longue durée mais avec des performances dégradées.

La publication EP 0 531 229 décrit un dispositif automatisé d'orientation de documents comportant une paire de caméras disposées en regard l'une de l'autre, et de part et d'autre du trajet des documents, afin de capter les images des deux faces des documents. Les images sont stockées dans une mémoire avant de subir un traitement ultérieur permettant de déterminer le sens de passage de chaque document et de l'orienter en conséquence. Chaque caméra capture des images en bandes, limitées à chaque document, chaque bande ayant une largeur de 1 pixel et étant convertie individuellement en signal électrique pour être stockée dans la mémoire. La caméra est apte à repérer une différence du niveau de luminosité afin de détecter la présence d'un document passant devant son objectif. L'image du document capturée est décomposée en quatre zones de référence du document, pour chacune desquelles on comptabilise la proportion de pixels noirs de chaque surface de référence. La comparaison des proportions des quatre zones de référence permet d'identifier la ou les zones comportant des indications et donc de déterminer le sens d'acheminement du document. Ce dispositif ne permet toutefois pas de prendre en compte l'altération des images numériques captées par les caméras.

### Exposé de l'invention

Le but de l'invention est de remédier à ces inconvénients.

L'invention part du constat que les performances d'une machine de tri postal avec un système d'acquisition d'images numériques des envois postaux dépendent d'abord du maintien d'une bonne qualité de ces images. Or pour obtenir des images de bonne qualité, il faut d'abord réaliser correctement une maintenance préventive du système d'acquisition d'images, c'est-dire de manière régulière un étalonnage/calibration de l'optique du système d'acquisition avec des mires de réglage, et il faut ensuite détecter le plus tôt possible la présence de salissures en regard de l'optique du système d'acquisition d'images, ces salissures pouvant provenir de poussières dans l'environnement industriel du système ou encore de traces de colle laissées par les envois sous enveloppe fermée ou ouverte sur l'optique (c'est-à-dire la lame transparente de protection) du système d'acquisition d'images.

L'invention a donc pour objet un dispositif de traitement d'objets selon la revendication 1.

De manière avantageuse, les objets traités par le dispositif sont des envois postaux.

L'invention s'étend également à une machine de tri postal comprenant un dispositif tel que décrit précédemment.

L'invention s'étend encore à un procédé selon la revendication 5.

L'agencement de ce moyen de contrôle/surveillance qui surveille en temps réel l'évolution des extrema d'intensité des pixels permet de détecter très rapidement une éventuelle dégradation des performances du système d'acquisition d'images. En particulier, dans le cas d'images numériques en multi-niveaux de gris, les deux extrema correspondent au blanc et au noir. Sur un système d'acquisition réglé de manière nominale, le niveau de gris maximum (correspondant au blanc) est proche de 255 tandis que le niveau de gris minimum (correspondant au noir) est proche de 0. Le principe du système de contrôle/surveillance selon l'invention, est de vérifier en temps réel que les niveaux maximum et minimum de blanc et de noir dans les images numériques ne dérivent pas au cours du temps par rapport à des valeurs de consigne, c'est-à-dire au fur et mesure de l'acquisition d'images numériques d'envois postaux successifs. Les pixels ayant un maximum d'intensité lumineuse sont les pixels de l'image numériques correspondant à la face des envois postaux qui est généralement blanche tandis que les pixels ayant un minimum d'intensité lumineuse sont les pixels de l'image numérique correspondant à la paroi de dos du convoyeur qui est avantageusement une courroie d'entraînement des envois postaux ayant une face sombre de préférence noire.

### Présentation sommaire des dessins

Un exemple de réalisation du dispositif et de mise en oeuvre du procédé selon l'invention est maintenant décrit en référence aux figures.
La figure 1 illustre de façon très schématique un dispositif de traitement d'envois postaux incluant un système d'acquisition d'images des envois postaux.
La figure 2 illustre par un schéma bloc les éléments fonctionnels du système de contrôle et de surveillance de la qualité des images.
La figure 3 illustre le principe de l'extraction d'extrema d'intensité lumineuse dans une image selon l'invention.
La figure 4 illustre de façon schématique le principe de la détection d'une anomalie à l'aide de la surveillance des extrema d'intensité lumineuse dans les images.

### Description des modes de réalisation

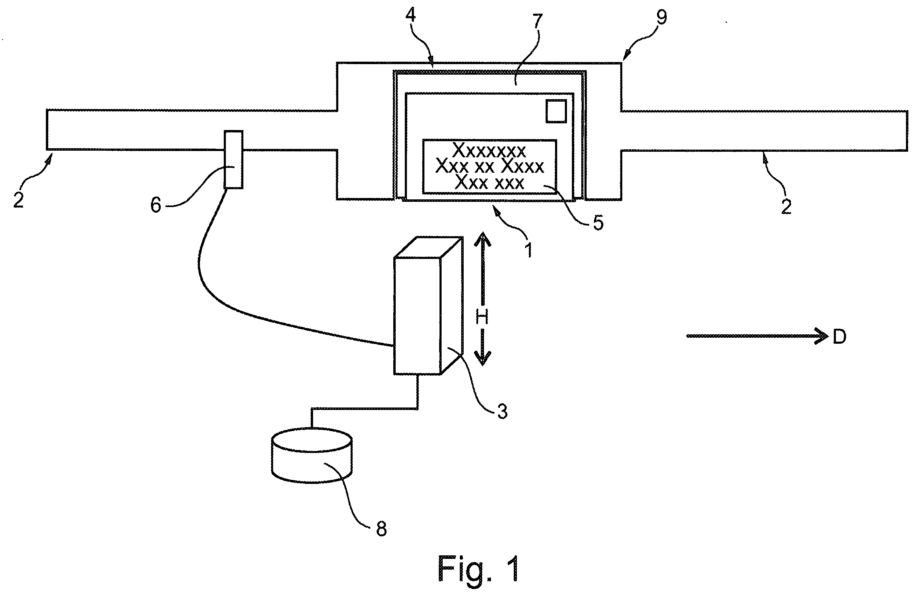

Sur la figure 1, on a représenté un dispositif de traitement d'envois postaux tels que 1 qui sont déplacés en série sur chant par un convoyeur, ici un convoyeur à bandes 2, devant une caméra 3 prévue pour former une image numérique 4 (l'image 4 correspond ici pour des raisons de simplicité à l'envoi lui-même) de chaque envoi en vu notamment de réaliser une reconnaissance de l'adresse de distribution 5 apposée sur la face de l'envoi considéré.

A noter que le dispositif de traitement d'envois postaux illustré sur la figure 1 fait partie normalement d'un ensemble plus vaste tel qu'une machine de tri postal comprenant des sorties de tri (non représentées) où les envois sont sélectivement dirigés comme cela est bien connu.

L'image de la face de chaque envoi portant l'adresse 5 est formée pendant que l'envoi est en mouvement selon la direction de convoyage D et le plan focal de la caméra 3 (c'est-à-dire du capteur CCD avec ses lentilles) s'étend sur toute la hauteur H de l'envoi de sorte que l'image 4 est formée par un balayage de l'envoi selon la direction D suite à la détection du passage de l'envoi par un capteur de passage 6 placé en amont de la caméra 3 selon la direction D.

Comme illustré sur la figure 1, dans l'image 4, la face de l'envoi 1 portant l'adresse 5 est inscrite dans un arrière plan 7 de couleur sombre et de préférence noire qui correspond à une paroi de dos 9 du convoyeur disposée en arrière de l'envoi 1 par rapport à la caméra 3. Cette paroi de dos 9 est avantageusement une autre bande ou courroie du convoyeur qui coopère avec la bande 2 pour l'entrainement par pincement des envois postaux selon la direction D.

Il est à noter que la paroi de dos 9 peut être simplement une plaque fixe peinte en noir et sur laquelle glissent les envois postaux.

Le référence 3 sur la figure 1 désigne une caméra, c'est-à-dire un système d'acquisition d'images mais aussi un ensemble plus vaste incluant une unité de traitement de données avec une mémoire 8 qui, à partir d'une image numérique acquise par la caméra et stockée dans la mémoire 8, réalise un traitement d'image pour ici d'une part reconnaître par OCR l'adresse de distribution 5 apposée sur la face de l'envoi et d'autre part effectuer un contrôle ou surveillance en temps réel de la qualité des images prises par la caméra après une phase de calibration de la caméra.

Des paramètres de calibration de la caméra sont établis lors d'une opération de maintenance de ce système d'acquisition d'images 3. L'opération de maintenance du système d'acquisition d'images consiste en particulier à étalonner le niveau de blanc et le niveau de noir des pixels d'image sur toute la hauteur de balayage H de la caméra en faisant passer devant la caméra une mire de réglage blanche puis une mire de réglage noire. A partir de ces mires, des coefficients de correction linéaire sont alors calculés pour que les niveaux d'intensité de blanc et de noir des pixels formés par la caméra soient uniformes et respectivement égaux à 255 et 0 (niveaux de saturation).

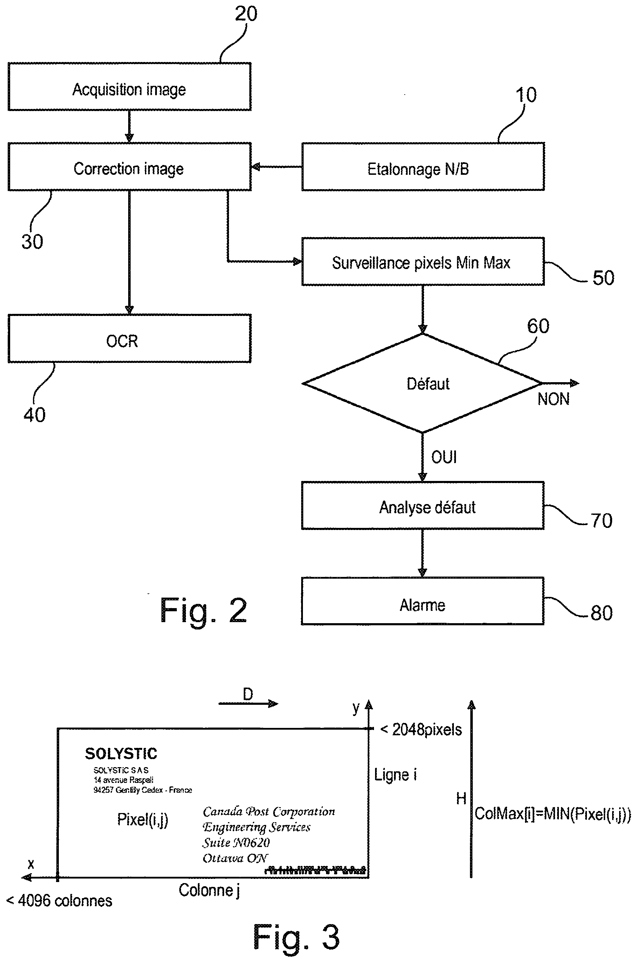

La figure 2 illustre le processus de traitement des images dans l'ensemble 3 à partir d'une étape d'étalonnage 10 des niveaux d'intensité de noir et de blanc comme indiqué plus haut.

Une image numérique d'un envoi courant est donc formée par la caméra 3 en 20. Les pixels de cette image sont corrigés en 30 à partir des coefficients de correction linéaire calculés dans l'étape 10.

L'image numérique corrigée est ensuite fournie à un processus de reconnaissance d'une adresse de distribution par OCR 40 implémenté dans l'unité de traitement de données à la suite de quoi la machine de tri peut diriger l'envoi courant vers une sortie de tri.

En parallèle au processus 40, l'image corrigée de l'envoi est fournie à un processus de contrôle/surveillance de la qualité des images symbolisé par le bloc 50 et implémenté dans l'unité de traitement de données.

Dans ce processus de contrôle/surveillance 50, on extrait des extrema d'intensité sur les pixels de l'image courante par un balayage selon la direction D de l'image et on détecte en 60 par une analyse de ces extrema un défaut de la qualité de l'image. Si un défaut est détecté en 60, le processus se poursuit par une analyse de défaut en 70 suivie du déclenchement d'une alerte ou d'une alarme en 80.

La Figure 3 illustre le balayage de l'image numérique pour l'extraction des extrema. La taille de l'image selon la hauteur H de l'envoi est ici de 2048 pixels au maximum. La taille de l'image selon la longueur L du pli (c'est-à-dire la direction D) est ici de 4096 pixels au maximum. Le pixel d'indice (i,j) sur l'image est donc un pixel situé sur la ligne i de l'image et sur la colonne j de l'image numérique. Le principe de la surveillance selon l'invention est d'extraire de chaque image d'un envoi, un vecteur colonne d'extrema de niveau d'intensité indiqué ici par MIN en balayant toute la longueur de l'image selon la direction D, laquelle inclut à la fois l'arrière plan de couleur sombre 7 et la face de l'envoi 1. Cette fonction MIN consiste à extraire sur une ligne i de balayage des pixels, un pixel sur une colonne j qui présente le minimum d'intensité, c'est-à-dire un pixel de couleur sombre. On peut comprendre que ce pixel sera présent aux deux extrémités de l'image qui correspondent à l'arrière plan de couleur sombre 7. En pratique, ce vecteur colonne MIN doit contenir sur toute sa hauteur H des pixels d'intensité minimale sans contraste (niveau de saturation à 0) si la qualité de l'image n'est pas altérée. Selon l'invention, un vecteur colonne MIN est extrait de chaque image au fur et à mesure que les envois passent devant la caméra 3 et sur une période d'intégration suffisamment longue, par exemple sur 1000 images consécutives, et une anomalie récurrente sur ces vecteurs (par exemple les pixels sur une ou plusieurs lignes de ce vecteur ne sont pas à un niveau 0) est indicative d'une altération de la qualité de l'image produite par le système d'acquisition 3, du fait par exemple de la présence d'une salissure sur l'optique (en particulier la lame de protection en verre ou analogue) du système d'acquisition d'images telle qu'une trace de colle.

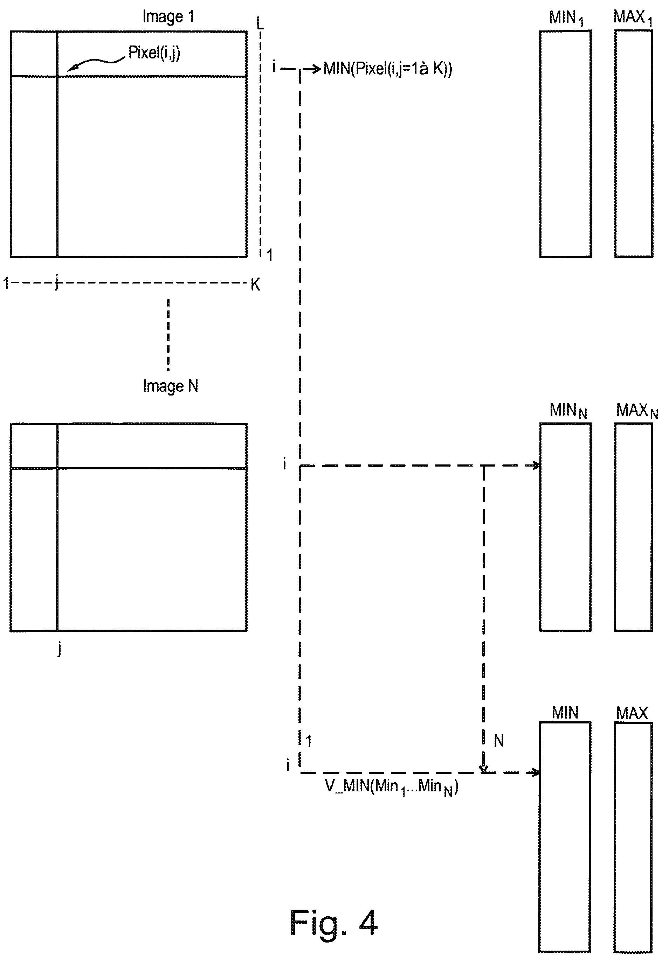

Sur la figure 4, on a illustré le principe de la mesure pour réaliser le contrôle/surveillance des extrema d'intensité sur une période d'intégration de N images. Sur cette figure 4, le vecteur colonne MIN1 symbolise l'extraction des pixels d'intensité minimale sur toutes les lignes de l'image 1 et le vecteur colonne MINn symbolise l'extraction des pixels d'intensité minimale sur toutes les lignes de l'image N. Maintenant, le vecteur colonne MIN (en bas de la figure 4) symbolise l'extraction, sur la période N d'intégration, des pixels d'intensité minimale sur toutes les lignes des vecteurs colonne MIN1 à MINn. On doit comprendre que dans ce processus de surveillance, le vecteur MIN est réinitialisé à chaque nouvelle période d'intégration de N images et une dégradation du système d'acquisition d'images peut donc être détectée au fur et à mesure de ces périodes successives d'intégration dès qu'apparaît dans ce vecteur colonne MIN un ou des pixels avec une valeur d'intensité lumineuse différente du niveau de saturation à 0, par exemple à 10. Il est entendu que pour des raisons d'efficacité temps réel, il est possible de calculer chaque vecteur colonne MINk pour une image k avec un pas d'échantillonnage p supérieur à 1 sur l'axe X de l'image montrée sur la figure 3.

La qualité des images produites par le système d'acquisition d'images peut également être altérée par un défaut de calibration qu'il est utile aussi de détecter et de discriminer par rapport à d'autres types de défaut.

Selon l'invention et comme illustré sur la figure 4, on extrait aussi des pixels d'intensité maximale (niveau d'intensité à 255 correspondant au blanc) sur toutes les lignes des images de 1 à N pour construire d'autres vecteurs colonne symbolisés par MAX1... MAXn et MAX analogues à MIN1 ...MINn et MIN, et ce plus particulièrement dans la zone de l'image correspondant à la face d'un envoi, le courrier étant généralement à prédominance de blanc. Une dégradation du système d'acquisition d'images est également alors détectée en temps réel en 60 sur la figure 2 dès qu'apparaît dans ce vecteur colonne MAX un ou des pixels avec une valeur d'intensité lumineuse différente de 255, par exemple 240.

L'analyse des deux vecteurs colonne MIN et MAX sur la période d'intégration N permet dans le processus 70 d'effectuer une analyse de défaut, par exemple sur la base de la table de décision ci-dessous.

Dans la table de décision Table 1 ci-dessous, les valeurs des seuils indiqués par seuils 1 et seuils 2 correspondent globalement à la taille d'une poussière ou à une tâche de colle, c'est-à-dire environ 1 mm, soit quelques lignes (par exemple seuil1 et seuil2 peuvent être fixés à 8) dans un vecteur colonne. La largeur d'un contraste dans un vecteur colonne est un paramètre de discrimination entre un défaut localisé sur l'image (suivant la direction D) et un problème de calibration du système d'acquisition d'images.

Cette table montre que dans deux cas indiqués par « * », l'identification du défaut est ambiguë. Ceci est le cas quand un lot d'envois successifs présentent sur la période d'intégration, tous une bande noire. Pour différencier cette situation de celle d'un défaut localisé (présence d'une poussière ou d'une trace de colle sur l'objectif de la caméra), il suffit de comparer le vecteur colonne MAX d'intégration au vecteur colonne MAXk constitué avec l'image courante k. Si les défauts dans ces deux vecteurs ont des largeurs et des profondeurs (niveaux d'intensité) similaires, une dégradation de la qualité de l'image est détectée alors que si le défaut dans le vecteur MAXk est plus prononcé que celui dans le vecteur MAX, ceci ne correspond pas à la détection d'une dégradation de l'image.

Bien entendu, l'invention peut s'appliquer à d'autres traitements d'images d'objets comme pour les billets de banque et les chèques et le mode de réalisation qu'à titre d'exemple non limitatif de l'invention.

**Table 1**

| MAX MIN | Pas de défaut détecté | Largeur défaut<seuil 1 | Largeur défaut >= seuil1 |
|---|---|---|---|
| Pas de défaut détecté | Qualité nominale | Défaut localisé ou autre* | Problème de calibration ou autre* |
| Largeur défaut<seuil2 | Défaut localisé | Défaut localisé | Défaut localisé |
| Largeur défaut>=seuil2 | Problème de calibration | Problème de calibration | Problème de calibration |

## Revendications

1. Dispositif de traitement d'objets comprenant un convoyeur (2) pour déplacer en série sur chant des objets (1), une caméra (3) orientée transversalement au convoyeur (2) pour former une image numérique (4) de chaque objet (1), une unité de traitement de données pour réaliser un traitement sur les pixels de l'image numérique (4) de l'objet (1), et en outre un moyen pour contrôler/surveiller la qualité des images numériques (4) formées par la caméra (3), **caractérisé en ce que** :
- ledit convoyeur présente une paroi de dos (9) de couleur sombre devant laquelle, par rapport à la caméra (3), passe chaque objet (1),
- ladite caméra (3) est agencée pour former une image numérique (4) de l'envoi dans son intégralité, image numérique (4) dans laquelle l'objet (1) s'inscrit dans un arrière plan (7) correspondant à ladite paroi de dos (9) du convoyeur, ladite image numérique (4) incluant à la fois ledit arrière plan (7) et la face de l'objet (1) dans son intégralité, et
- ledit moyen de contrôle/surveillance est agencé pour balayer des lignes de pixels dans chaque image numérique (4) incluant des pixels correspondant audit arrière plan (7) afin d'extraire, pour chaque ligne balayée, un pixel présentant un niveau minimum d'intensité lumineuse correspondant à la paroi de dos (9) de couleur sombre et un pixel présentant un niveau maximum d'intensité lumineuse correspondant à ladite face dudit objet (1), ledit moyen de contrôle/surveillance étant en outre agencé pour détecter à partir d'une pluralité d'images numériques (4) consécutives d'objets (1) successifs un contraste parmi lesdits pixels extraits, ce contraste étant indicatif d'une altération de la qualité des images numérique (4) formées par la caméra (3).

2. Dispositif selon la revendication 1, **caractérisé en ce que** ladite paroi de dos (9) est constituée par une face d'une courroie d'entrainement des objets (1).

3. Dispositif selon l'une des revendications 1 à 2, **caractérisé en ce que** les objets (1) sont des envois postaux.

4. Machine de tri postal **caractérisé en ce qu'**elle comprend un dispositif selon l'une des revendications 1 à 3.

5. Procédé pour contrôler/surveiller au cours du temps la qualité des images numériques (4) formées par une caméra (3) pour dispositif de traitement d'objets, **caractérisé en ce qu'**il comprend les étapes suivantes :
- saisir (20) l'image numérique (4) et dans son intégralité d'un objet (1) avec la caméra (3) de telle façon que l'objet (1) s'inscrive dans un arrière plan (7) de couleur sombre, ladite image numérique (4) incluant à la fois ledit arrière plan (7) et une face de l'objet (1), et enregistrer cette image numérique (4) dans une mémoire d'une unité de traitement de données,
- balayer (50) des lignes de pixels dans l'image numérique (4) incluant des pixels correspondant audit arrière plan (7) afin d'extraire pour chaque ligne balayée, un pixel présentant un niveau minimum d'intensité lumineuse correspondant à la paroi de dos (9) de couleur sombre et un pixel présentant un niveau maximum d'intensité lumineuse correspondant à ladite face de l'objet (1)
- analyser lesdits pixels extraits et ces extrema et détecter (60) à partir d'une pluralité d'images numérique (4) consécutives d'objets (1) successifs, un contraste parmi lesdits pixels extraits dans ces images numériques (4) consécutives pour identifier une altération de la qualité des images numériques (4) formées par la caméra (3).

## Patentansprüche

1. Vorrichtung zur Verarbeitung von Gegenständen, umfassend einen Förderer (2) zum seriellen Verlagern auf Kante der Gegenstände (1), eine quer zum Förderer (2) orientierte Kamera (3) zum Erzeugen eines digitalen Bildes (4) jedes Gegenstandes (1), eine Datenverarbeitungseinheit zum Durchführen einer Verarbeitung der Pixel des digitalen Bildes (4) des Gegenstandes (1), und ferner ein Mittel zum Kontrollieren/Überwachen der Qualität der von der Kamera (3) erzeugten digitalen Bilder (4), **dadurch gekennzeichnet, dass**:
- der Förderer eine Rückenwandung (9) von dunkler Farbe aufweist, vor der, in Bezug auf die Kamera (3), jeder Gegenstand (1) vorbeiläuft,
- die Kamera (3) ausgebildet ist zum Erzeugen eines digitalen Bildes (4) der Sendung in ihrer Gesamtheit, digitales Bild (4), bei dem der Gegenstand (1) vor einem der Rückenwandung (9) des Förderers entsprechenden Hintergrund (7) aufgenommen wird, wobei das digitale Bild (4) sowohl den Hintergrund (7) als auch die Frontseite des Gegenstands (1) in seiner Gesamtheit enthält, und
- das Mittel zum Kontrollieren/Überwachen ausgebildet ist zum Abtasten der Pixelzeilen in jedem digitalen Bild (4) einschließlich der dem Hintergrund (7) entsprechenden Pixel, um für jede abgetastete Zeile ein Pixel, das ein minimales Lichtintensitätsniveau aufweist und der Rückenwandung (9) von dunkler Farbe entspricht und ein der Frontseite des Gegenstands (1) entsprechendes Pixel von maximalem Lichtintensitätsniveau zu extrahieren, wobei das Mittel zum Kontrollieren/Überwachen ferner ausgebildet ist zum Erfassen, ausgehend von einer Mehrzahl aufeinanderfolgender digitaler Bilder (4) aufeinanderfolgender Gegenstände (1), eines Kontrastes unter den extrahierten Pixeln, wobei der Kontrast eine Angabe für eine Veränderung der Qualität der von der Kamera (3) erzeugten digitalen Bilder (4) ist.

2. Vorrichtung nach Anspruch 1, **dadurch gekennzeichnet, dass** die Rückenwandung (9) gebildet ist durch eine Seite eines Antriebsriemens der Gegenstände (1).

3. Vorrichtung nach einem der Ansprüche 1 bis 2, **dadurch gekennzeichnet, dass** die Gegenstände (1) postalische Sendungen sind.

4. Postsortiermaschine, **dadurch gekennzeichnet, dass** sie eine Vorrichtung nach einem der Ansprüche 1 bis 3 umfasst.

5. Verfahren zum Kontrollieren/Überwachen der Qualität von durch eine Kamera (3) erzeugten digitalen Bildern (4) im Laufe der Zeit für eine Vorrichtung zur Verarbeitung von Gegenständen, **dadurch gekennzeichnet, dass** es die folgenden Schritte umfasst:
- Erfassen (20) des digitalen Bildes (4) und in seiner Gesamtheit eines Gegenstandes (1) mit der Kamera (3) derart, dass der Gegenstand (1) in einem Hintergrund (7) von dunkler Farbe aufgenommen wird, wobei das digitale Bild (4) zugleich den Hintergrund (7) und eine Stirnseite des Gegenstandes (1) umfasst, und Speichern dieses digitalen Bildes (4) in einem Speicher einer Datenverarbeitungseinheit,
- Abtasten (50) der Pixelzeilen in dem digitalen Bild (4) einschließlich der dem Hintergrund (7) entsprechenden Pixel, um für jede abgetastete Zeile ein Pixel, das ein minimales Lichtintensitätsniveau aufweist und der Rückenwandung (9) von dunkler Farbe entspricht und ein Pixel von maximalem Lichtintensitätsniveau, das der Stirnseite des Gegenstands (1) entspricht, zu extrahieren,
- Analysieren der extrahierten Pixel und dieser Extrema und Detektieren (60), ausgehend von einer Mehrzahl von aufeinanderfolgenden digitalen Bildern (4) aufeinanderfolgender Gegenstände (1), eines Kontrastes unter den extrahierten Pixeln in diesen aufeinanderfolgenden digitalen Bildern (4) zum Identifizieren einer Veränderung der Qualität der von der Kamera (3) erzeugten digitalen Bilder (4).

## Claims

1. An article-processing device comprising a conveyor (2) for moving articles (1) in series and on edge, a camera (3) facing transversely relative to the conveyor (2) so as to take a digital image (4) of each article (1), a data processor unit for performing processing on the pixels of the digital image (4) of the article (1), and, in addition, a means for inspecting/monitoring the quality of the digital images (4) taken by the camera (3), said article-processing device being **characterized in that**:
· said conveyor has a back wall (9) of a dark color and in front of which, relative to the camera (3), each article (1) passes;
· said camera (3) is arranged to take a digital image (4) of the article in its integrality, said digital image (4) within which the article (1) lies against a background (7) corresponding to said back wall (9) of the conveyor, said digital image (4) including both said background (7) and the face of the article (1) in its integrality; and
· said inspection/monitoring means is arranged to scan rows of pixels in each digital image (4) including pixels corresponding to said background (7) in order to extract, for each scanned row, a pixel having a light intensity minimum corresponding to the back wall (9) of a dark color and a pixel having a light intensity maximum corresponding to said face of said article (1), said inspection/monitoring means further being arranged to detect, from a plurality of digital images (4) of successive articles (1), a contrast among said extracted pixels, such contrast being indicative of degradation of the quality of the digital images (4) taken by the camera (3).

2. A device according to claim 1, **characterized in that** said back wall (9) is constituted by a face of a drive belt for driving the articles (1).

3. A device according to claim 1 or claim 2, **characterized in that** the articles (1) are mailpieces.

4. A postal sorting machine **characterized in that** it includes a device according to any one of claims 1 to 3.

5. A method of inspecting/monitoring, over time, the quality of the digital images (4) taken by a camera (3) for an article-processing device, said method being **characterized in that** it comprises the following steps:
· taking (20) a digital image (4) of an article (1) in its integrality using the camera (3) in such manner that the article (1) lies within and against a background (7) of dark color, said digital image (4) including both said background (7) and a face of the article (1), and recording said digital image (4) in a memory of a data processor unit;
· scanning (50) rows of pixels in the digital image (4) including pixels corresponding to said background (7) in order to extract, for each scanned row, a pixel having a light intensity minimum corresponding to the back wall (9) of a dark color and a pixel having a light intensity maximum corresponding to said face of said article (1); and
· analyzing said pixels extracted from such extrema and detecting (60), on the basis of a plurality of digital images (4) of successive articles (1), a contrast among said pixels extracted from said digital images (4) so as to identify any degradation in the quality of the digital images (4).
